Europäisches Patentamt

European Patent Office

Office européen des brevets

(11) Veröffentlichungsnummer: **0 273 283 B1**

(12) **EUROPÄISCHE PATENTSCHRIFT**

(45) Veröffentlichungstag der Patentschrift: **28.04.93**

(21) Anmeldenummer: **87118485.9**

(22) Anmeldetag: **14.12.87**

(51) Int. Cl.⁵: **C07C 69/30**, C07C 69/33, C08K 5/10

(54) **Partialester gesättigter, geradkettiger C22-C34-Monocarbonsäuren mit Polyolen, Verfahren zu ihrer Herstellung, ihre Verwendung als Trennmittel für Kunststoffe sowie diese enthaltende Kunststoffe, insbesondere auf Basis von PVC oder PVC-Copolymerisaten.**

(30) Priorität: **22.12.86 DE 3643968**

(43) Veröffentlichungstag der Anmeldung:
**06.07.88 Patentblatt 88/27**

(45) Bekanntmachung des Hinweises auf die
Patenterteilung:
**28.04.93 Patentblatt 93/17**

(84) Benannte Vertragsstaaten:
**AT BE CH DE FR GB IT LI NL**

(56) Entgegenhaltungen:
**DE-A- 2 022 011**
**DE-A- 3 118 417**
**DE-B- 1 157 209**
**US-A- 3 600 186**

**PATENT ABSTRACTS OF JAPAN, unexamined applications, C Sektion, Band 3, Nr. 128, 24. Oktober 1979, THE PATENT OFFICE JAPANESE GOVERNMENT, Seite 23 C 62**

(73) Patentinhaber: **NEYNABER CHEMIE GmbH**
**Am Wedenberg Postfach 11 20**
**W-2854 Loxstedt(DE)**

(72) Erfinder: **Worschech, Kurt, Dr.**
**Alte Strasse 4**
**W-2854 Loxstedt(DE)**
Erfinder: **Fleischer, Erwin**
**Dwarsweg 1**
**W-2858 Schiffdorf(DE)**
Erfinder: **Wedl, Peter**
**Löningstrasse 13**
**W-2850 Bremerhaven(DE)**
Erfinder: **Löffelholz, Frido**
**Vieländer Weg 226 F**
**W-2850 Bremerhaven-Surheide(DE)**
Erfinder: **Brand, Ernst-Udo**
**Allersstrasse 18**
**W-2850 Bremerhaven(DE)**

**Beschreibung**

Die Erfindung betrifft Partialester, gesättigter, geradkettiger $C_{22}$-$C_{34}$-Monocarbonsäuren mit Polyolen, Verfahren zu ihrer Herstellung und ihre Verwendung als Trennmittel für Kunststoffe, insbesondere auf Basis von PVC oder PVC-Copolymerisaten. Die Erfindung betrifft weiterhin Kunststofformmassen, insbesondere auf Basis von PVC oder PVC-Copolymerisaten mit einem Gehalt an den genannten Partialestern.

Vollester gesättigter, geradkettiger $C_{22}$-$C_{34}$-Monocarbonsäuren mit Polyolen spielen seit vielen Jahren eine wichtige Rolle bei der Verarbeitung von PVC und PVC-Copolymerisaten, insbesondere als Trennmittel bei Kalanderprozessen. Sie weisen einerseits eine gute Trennwirkung auf und sind andererseits in PVC relativ gut verträglich. Diese Verträglichkeit ist besonders ausgeprägt, wenn es sich um schlagzäh modifizierte oder halbharte Ansätze handelt. Klassische Anwendungsfälle sind die Herstellung von modifizierten, glasklaren Verpackungsfolien auf Basis von Suspensions- oder Masse-PVC sowie die Herstellung von thermisch vergüteten Emulsions-PVC-Folien, z.B. für die Klebebandherstellung. Im letzteren Fall ist die Verträglichkeit besonders wichtig, da die Einsatzgrenze durchaus bei 5 phr liegen kann. Nachteilig ist dagegen die recht niedrige Transparenzgrenze in nichtmodifiziertem Hart-PVC. Angewendet werden überwiegend Vollester des Ethylenglykols bzw. des 1,3-Butandiols sowie des Glycerins. Als Carbonsäuren werden sogenannte Montansäuren, die durch oxidative Bleichung von Montanwachsen erhältlich sind und ein Gemisch von überwiegend gesättigten, geradkettigen $C_{22}$-$C_{34}$-Carbonsäuren mit gerader Kohlenstoffzahl darstellen, eingesetzt.

Weiterhin bekannt sind Partialester von $C_8$-$C_{22}$-Fettsäuren, die mit Mono- und Disacchariden verestert sind, wobei jede Mono- bzw. Disaccharideinheit mindestens 4 $C_8$-$C_{22}$-Fettsäurerestaufweist, und die als Nahrungsmittelfette mit vermindertem Kaloriengehalt verwendet werden; vgl. US-PS 3 600 186.

Aus der deutschen Offenlegungsschrift DE-A-31 18 417 sind Voll- und Partialester von $C_{8-36}$-Fettsäuren und oligomeren Polyolen, wobei die oligomeren Polyole mindestens aus drei Monomeren aufgebaut sind, als Verarbeitungshilfsmittel für PVC bekannt.

Die Erfindung ist auf Partialester gesättigter, geradkettiger $C_{22}$-$C_{34}$-Monocarbonsäuren mit Polyolen gerichtet, die in nichtmodifiziertem PVC eine bessere Verträglichkeit aufweisen und damit eine deutliche Anhebung der Transparenzgrenze ergeben, und insbesondere in modifiziertem PVC, wo die etwas zu starke Löslichkeit der üblicherweise verwendeten Montanwachse die Trennwirkung deutlich reduziert, über eine verbesserte Trennleistung verfügen.

Diese Aufgabe wird durch Partialester gesättigter, geradkettiger $C_{22}$-$C_{34}$-Monocarbonsäuren mit Polyolen aus der von Glycerin, Diglycerin, Pentaerythrit, Neopentylglykol, 1,4-Butandiol und Sorbit gebildeten Gruppe, die im Zahlenmittel mindestens eine freie Hydroxylgruppe aufweisen und die als Gemische von Partialestern mindestens zweier Monocarbonsäuren aus dem Kettenlängenbereich von $C_{22}$ bis $C_{34}$ vorliegen, gelöst.

Bevorzugt werden als $C_{22}$-$C_{34}$-Monocarbonsäuren der vorstehend genannten Art die aus Montanwachsen gewonnenen Montansäuren eingesetzt.

Bevorzugte Vertreter der Partialester der Erfindung sind die Partialmontansäureester des Glycerins, insbesondere Glycerin-mono- und -dimontanat sowie des Diglycerins, insbesondere Diglycerin-sesquimontanat. Weiterhin bevorzugt sind Partialmontansäureester des Pentaerythrits, insbesondere Pentaerythrit-dimontanat, des Neopentylglykols, insbesondere Neopentylglykol-monomontanat, des 1,4-Butandiols und des Sorbits, insbesondere Sorbit-trimontanat.

Die Erfindung ist weiterhin auf ein Verfahren zur Herstellung von Partialestern gesättigter, geradkettiger $C_{22}$-$C_{34}$-Carbonsäuren gerichtet, das dadurch gekennzeichnet ist, daß man die gesättigten, geradkettigen $C_{22}$-$C_{34}$-Monocarbonsäuren bzw. Montansäuren mit den Polyolen aus der von Glycerin, Diglycerin, Pentaerythrit, Neopentylglykol, 1,4-Butandiol und Sorbit gebildeten Gruppe in Gegenwart von Katalysatoren verestert. Als Katalysatoren eignen sich insbesondere für Veresterungsreaktionen übliche saure Katalysatoren, z.B. Toluolsulfonsäure, sowie metallisches Zinn, Zinn(II)oxid, saure Titanverbindungen und dergleichen.

Die $C_{22}$-$C_{34}$-Monocarbonsäuren werden mit den genannten Polyolen in den gewünschten Partialestern entsprechenden stöchiometrischen Verhältnissen eingesetzt. Dem Fachmann ist geläufig, daß bei derartigen Reaktionen nicht ausschließlich der gewünschte Partialester erhalten wird, sondern stets ein Gemisch, das überwiegend den gewünschten Partialester enthält. Darüber hinaus ist es auch möglich, gezielt Partialestergemische herzustellen, z.B. Sesquimontanate, bei denen 1 Mol Polyol statistisch mit 1,5 Mol Montansäure reagiert.

Weitere bevorzugte Merkmale des Verfahrens der Erfindung ergeben sich aus den Verfahrensansprüchen.

Die Erfindung betrifft weiterhin die Verwendung eines Partialesters oder mehrerer der Erfindung als Trennmittel für Kunststoffe, insbesondere auf Basis von PVC oder PVC-Copolymerisaten. Die Partialester der Erfindung können gegebenenfalls zusammen mit anderen üblichen Additiven und Stabilisierungsmitteln, insbesondere Sn-haltigen Stabilisierungsmitteln, den Kunststoffen zugesetzt werden. Weitere vorteilhafte Merkmale der Verwendung der Partialester der Erfindung ergeben sich aus den Verwendungsansprüchen.

Schließlich betrifft die Erfindung Kunststofformmassen, insbesondere auf Basis von PVC oder PVC-Copolymerisaten, enthaltend 0,01 bis 5,0 Gew.-% Partialester der Erfindung bzw. erhalten unter Zusatz von 0,01 bis 5 Gew.-% Partialestern, hergestellt nach einem der Verfahren der Erfindung.

Die Erfindung wird im folgenden anhand von Ausführungsbeispielen näher erläutert.

Beispiel 1

Glycerin-dimontanat

Ein Dreihalskolben mit Rührer, Thermometer und absteigendem Liebigkühler wurde mit 19 g Glycerin (0,207 Mol), 165 g Montansäure (0,413 Mol; Hoechst-Wachs S) und 0,4 g Zinnstaub beschickt. Das Gemisch wurde unter Rühren auf 210°C erhitzt, wobei ein leichtes Vakuum angelegt wurde, das innerhalb von 1,5 h auf 20 mbar gesteigert wurde. Nach dieser Zeit war die Säurezahl auf ca. 1 abgefallen. Das Gemisch wurde auf 100°C gekühlt, gebleicht und filtriert. Man erhielt ein hellgelbes Hartwachs mit einem Tropfpunkt von 79°C.

Beispiel 2

Glycerin-monomontanat

Analog Beispiel 1 wurden 400 g Montansäure (Hoechst-Wachs S), 97 g Glycerin (5% Überschuß) und 0,5 g Zinnstaub umgesetzt. Man erhielt ein braunstichig-gelbes Hartwachs mit einem Tropfpunkt von 84,2°C.

Beispiel 3

Diglycerin-sesquimontanat

Analog Beispiel 1 wurden 112 g Diglycerin (0,67 Mol), 400 g Montansäure (1,0 Mol) und 0,4 g Zinnstaub auf 200°C erhitzt, wobei ein leichtes Vakuum angelegt wurde. Dieses wurde innerhalb von 3,5 h auf 24 mbar gesteigert. Das Produkt wies eine Säurezahl von ca. 1 auf. Nach dem Abkühlen auf 100°C, Bleichen und Filtrieren erhielt man ein braunfarbenes Hartwachs mit einem Tropfpunkt von 81°C.

Beispiel 4

Pentaerythrit-dimontanat

Analog Beispiel 1 wurden 28,1 g Pentaerythrit (0,207 Mol), 165 g Montansäure (0,413 Mol) und 0,4 g Zinnstaub auf 200°C erhitzt, wobei ein leichtes Vakuum angelegt wurde. Nach 2 h waren 20 mbar erreicht; die Säurezahl betrug ca. 1. Nach dem Abkühlen auf 100°C, Bleichen und Filtrieren erhielt man ein braunstichig-gelbes Hartwachs mit einem Tropfpunkt von 79°C.

Beispiel 5

Neopentylglykol-monomontanat

Analog Beispiel wurden 64,2 g Neopentylglykol (0,617 Mol), 246,9 g Montansäure (0,617 Mol) und 0,4 g Zinnstaub auf 210°C erhitzt, wobei ein leichtes Vakuum angelegt wurde. Nach 5 h waren 150 mbar erreicht; die Säurezahl betrug ca. 2. Nach dem Abkühlen auf 100°C, Bleichen und Filtrieren erhielt man ein braungelbes Hartwachs mit einem Tropfpunkt von 72°C.

Beispiel 6

1,4-Butandiol-monomontanat

Analog Beispiel 1 wurden 57,2 g 1,4-Butandiol (0,636 Mol), 254,2 g Montansäure (0,636 Mol) und 0,4 g Zinnstaub auf 210°C erhitzt, wobei ein leichtes Vakuum angelegt wurde. Das Vakuum wurde innerhalb von 3 h auf 152 mbar gesteigert. Man erhielt eine Säurezahl des Gemisches von 1,5. Nach dem Abkühlen auf 100°C, Bleichen und Filtrieren erhielt man ein bräunlich-gelbes Wachs mit einem Tropfpunkt von 77°C.

Beispiel 7

Sorbit-trimontanat

Analog Beispiel 1 wurden 41,1 g Sorbit (0,226 Mol), 271,1 g Montansäure (0,678 Mol) und 0,4 g Zinnstaub auf 200°C erhitzt, wobei ein leichtes Vakuum angelegt wurde. Dieses wurde innerhalb von 14 h auf 15 mbar gesteigert. Die Säurezahl war auf 5 gefallen. Nach dem Abkühlen auf 100°C wurde filtriert, wobei ein braunes Hartwachs mit einem Tropfpunkt von 78°C erhalten wurde.

In den nachfolgenden Tabellen 1, 2 und 3 werden die Ergebnisse von Versuchen wiedergegeben, aus denen sich die Wirksamkeit der Partialester der Erfindung in modifiziertem (Grundansatz I) und unmodifiziertem (Grundansatz II) PVC ergibt; als Vergleichsubstanz wurde handelsübliches Montanwachs (Hoechst-Wachs [R] E) verwendet.

Die in den Grundansätzen I verwendeten MBS-Modifier sind handelsübliche High-Impact-Modifier auf Basis von Methacrylat-Butadien-Styrol-Copolymerisaten. Die in den gleichen Grundansätzen verwendeten Flow-Modifier sind handelsübliche Präparate auf der Basis von Methacrylsäureestern.

Zur Bestimmung der Dauer der Klebfreiheit wurde die Formmasse auf einem Laborwalzwerk, dessen Walzen eine Ballenbreite von 450 mm und einen Ballendurchmesser von 220 mm hatten (Hersteller: Fa. Berstorff) bei einer Walzentemperatur von 200°C und einer Walzendrehzahl von 12,5 Upm im Gleichlauf unter regelmäßigem Umschlagen des gebildeten Prüffells bis zum Festkleben der Formmasse an den Walzen bearbeitet. Dabei wurde die early-color-Stabilität durch regelmäßige Probennahme und visuelle Beurteilung der Proben beobachtet. Gleichzeitig wurde die auftretende maximale Spaltlast elektronisch registriert.

Zur Prüfung der Transparenz wurden aus den erhaltenen PVC-Formmassen 4 mm starke Preßplatten hergestellt und deren Transparenz in Prozent gegenüber Luft als Bezugsstandard ermittelt. Für die Messungen wurde ein Transparenzmeßgerät der Fa. Dr. Bruno Lange GmbH, Neuß verwendet, wobei nach dem Absorptionsverfahren gearbeitet wurde.

Das Plastizierverhalten der erhaltenen Formmassen wurde mit Hilfe eines Plastographen (Plasticorder PL 151; Fa. Brabender; siehe P. Klenk, "Der Plastverarbeiter", 21. Jahrgang, 1970/7, Seiten 642 bis 644) geprüft. Die Kammertemperatur betrug 165°C, die Drehzahl 40 Upm. Die Untersuchungen wurden jeweils an 34 g Substanz durchgeführt.

Zu jeder Formmasse wird in den nachfolgenden Tabellen die Plastizierzeit, der maximale Knetwiderstand, der Knetwiderstand 15 Minuten nach dem Erreichen des Maximums und die Massetemperatur 15 Minuten nach dem Erreichen des Maximums angegeben.

Die stabilisierende Wirkung von Montanwachs und den Partialestern der Erfindung wurde anhand der "statischen Thermostabilität" von Walzfellen geprüft. Zu diesem Zweck wurden die Formmassen auf einem Laborwalzwerk der Abmessungen 450 x 220 mm (Fa. Berstorff) bei einer Walzentemperatur von 170°C und einer Walzendrehzahl von 12,5 Upm im Gleichlauf von 5 Minuten zu Prüffolien verarbeitet. Die ca. 0,5 mm dicken Felle wurden zu quadratischen Probestücken mit 10 mm Kantenlänge zerschnitten, die anschließend in einem Trockenschrank mit 6 rotierenden Horden (Heraeus FT 420 R) einer Temperatur von 180°C ausgesetzt wurden. Im Abstand von 10 Minuten wurden Proben entnommen und deren Farbänderung begutachtet. Es wird jeweils der Zeitraum angegeben, nach dem die erste Verfärbung der Proben beobachtet wurde; weiterhin auch der Zeitraum, nach dem der Test wegen zu starker Verfärbung (Stabilitätsende) beendet wurde.

Soweit nichts anderes angegeben ist, beziehen sich die Mengenangaben auf Gewichtsteile (phr).

Tabelle 1

Grundansätze

| I | 100 | S-PVC, K-Wert 60 |
|---|---|---|
| | 6 | MBS-Modifier |
| | 1,5 | Flow-Modifier |
| | 1,5 | Octyl-Zinnmercaptid |
| | 1,0 | Glycerindioleat |

| II | 100 | S-PVC, K-Wert 60 |
|---|---|---|
| | 1,5 | Octyl-Zinnmercaptid |
| | 1,0 | Glycerindioleat |

Klebfreiheit auf der Walze:
Prüfgerät:                              Berstorff-Walzwerk 450 x 220 mm
Walzenoberflächentemperatur:           $200^\circ$C
Einwaage:                              220 g
Upm:                                  $12,5 \, min^{-1}$

Grundansatz I

| | Anfangsfarbe | early-color-Stabilität | Kleb-freiheit | Spalt-last (KN) |
|---|---|---|---|---|
| 0,3 Montan-wachs | farblos | 12' | 14' | 40,7 |
| 0,3 Sorbit-tri-montanat | farblos | 12' | 18' | 40,0 |
| 0,5 Montan-wachs | farblos | 14' | 18' | 41,0 |
| 0,5 Sorbit-tri-montanat | farblos | 12' | 30' | 39,7 |

Grundansatz II

| | Anfangsfarbe | early-color-Stabilität | Kleb-freiheit | Spalt-last (KN) |
|---|---|---|---|---|
| 0,3 Montan-wachs | farblos | 14' | 16' | 39,1 |
| 0,3 Sorbit-tri-montanat | farblos | 14' | 30' | 37,4 |
| 0,5 Montan-wachs | farblos | 16' | 24' | 37,2 |
| 0,5 Sorbit-tri-montanat | farblos | 16' | 30' | 37,1 |

Transparenz an 4 mm Preßplatten: (Lichtdurchlässigkeit)

| | Grundansatz I | | Grundansatz II | |
|---|---|---|---|---|
| | 0,3 phr | 0,5 phr | 0,3 phr | 0,5 phr |
| Montanwachs | 64 % | 12 % | 65 % | 61 % |
| Sorbit-tri-montanat | 74 % | 73 % | 63 % | 60 % |

5

Tabelle 2

Ausführung

Grundansätze:

I 100   S-PVC, K-Wert 60        II   100   S-PVC, K-Wert 60
  10    MBS-Modifier                  1,5 Octyl-Zinnmercaptid
   1    Flow-Modifier                 1,0 Glycerindioleat
   1,5  Octyl-Zinnmercaptid
   1    Glycerindioleat

Klebfreiheit auf der Walze (Bedingungen s. Tabelle 1):

| Grundansatz I | Anfangsfarbe | early-color-Stabilität | Kleb-freiheit | Spalt-last (KN) |
|---|---|---|---|---|
| 0,3 Montanwachs | farblos | - | 4' | - |
| 0,3 Glycerin-mo-no-montanat | farblos | - | 4' | - |
| 0,3 Glycerin-di--montanat | farblos | 8' | 8' | - |
| 0,3 Diglycerin--sesqui--montanat | farblos | 8' | 8' | - |
| 0,5 Montanwachs | farblos | 8' | 8' | - |
| 0,5 Glycerin-mo-no-montanat | farblos | - | 4' | - |
| 0,5 Glycerin-di--montanat | farblos | 12' | 14' | - |
| 0,5 Diglycerin--sesqui--montanat | farblos | 10' | 10' | - |

| Grundansatz II | | | | |
|---|---|---|---|---|
| 0,3 Montanwachs | farblos | 16' | 18' | 43,7 |
| 0,3 Glycerin-mo-no-montanat | farblos | 14' | 16' | 44,3 |
| 0,3 Glycerin-di--montanat | farblos | 18' | 28' | 42,2 |
| 0,3 Diglycerin--sesqui--montanat | farblos | 14' | 16' | 43,2 |
| 0,5 Montanwachs | farblos | 14' | 26' | 43,0 |
| 0,5 Glycerin-mo-no-montanat | farblos | 14' | 24' | 43,2 |
| 0,5 Glycerin-di--montanat | farblos | 18' | 32' | 41,0 |
| 0,5 Diglycerin--sesqui-montanat | farblos | 14' | 18' | 42,3 |

6

Tabelle 2 (Fortsetzung)

Plastographenversuche: II   T = $165^{\circ}$C; n = 40 Upm; E = 34 g

|  | Plastizier- zeit in Min. | Knetwider- stand Max. | Nm $^{\circ}$sek$^{-1}$ 15'nMax. | Massetemp. $^{\circ}$C 15'nMax. |
|---|---|---|---|---|
| 1,0 Montan- wachs | 5,0 | 19,5 | 17,2 | 167,4 |
| 1,0 Glycerin- -mono- -montanat | 3,6 | 21,0 | 17,0 | 167,4 |
| 1,0 Glycerin- -di- -montanat | 15,4 | 18,0 | 17,5 | 168,8 |
| 1,0 Diglycerin- -sesqui- -montanat | 3,9 | 21,0 | 17,3 | 167,0 |

Transparenz an 4 mm Preßplatten:

|  | Grundansatz I 0,5 phr | Grundansatz II 0,5 phr |
|---|---|---|
| Montanwachs | 61 % | 6 % |
| Glycerin-mono-montanat | 64 % | 63 % |
| Glycerin-di-montanat | 60 % | 40 % |
| Diglycerin-sesqui-montanat | 64 % | 69 % |

7

Tabelle 3

Ausführung

Grundansatz I

| | | |
|---|---|---|
| 100 | S-PVC, K-Wert 60 | |
| 10 | MBS-Modifier | |
| 1 | Flow-Modifier | |
| 1,5 | Octyl-Zinnmercaptid | |
| 1,0 | Glycerindioleat | |

Klebfreiheit auf der Walze (Bedingungen siehe Tabelle 1):

| | Anfangsfarbe | early-color-Stabilität | Klebfreiheit | Spaltlast (KN) |
|---|---|---|---|---|
| 0,5 Montanwachs | farblos | – | 4' | 46,8 |
| 0,5 Glycerin-mono-montanat | farblos | – | 4' | 47,0 |
| 0,5 Glycerin-di-montanat | farblos | 14' | 14' | 47,0 |

Transparenz an 4 mm Platten:

| | Lichtdurchlässigkeit |
|---|---|
| 0,5 Montanwachs | 66 % |
| 0,5 Glycerin-mono-montanat | 69 % |
| 0,5 Glycerin-di-montanat | 65 % |

Ausführung
Grundansätze:

| I | 100 | S-PVC, K-Wert 60 | II | 100 | S-PVC, K-Wert 60 |
|---|---|---|---|---|---|
| | 10 | MBS Modifier | | 1 | Octyl-Zinnmercaptid |
| | 1 | Flow-Modifier | | | |
| | 1,5 | Octyl-Zinnmercaptid | | | |

Bestimmung der statischen Thermostabilität an Walzfellen im Trockenschrank mit rotierenden Horden (Haereus) bei 180°C.

Stabilitätsprüfungen:

| Grundansatz II | Anfangsfarbe | early-color-Stabilität | | Stab.-Ende |
|---|---|---|---|---|
| | | leicht | deutlich | |
| 0,5 Montanwachs | farblos | 45' | 75' | 105' |
| 0,5 Glycerin-mono-montanat | farblos | 60' | 90' | 120' |
| 0,5 Glycerin-di-montanat | farblos | 60' | 75-90' | 105' |

Wie sich aus den Tabellen ergibt, erreicht der Partialester gemäß Beispiel 2 (Glycerin-monomontanat) sowohl in modifizierten als auch in modifizierungsmittelfreien PVC-Ansätzen nahezu die Trennwirkung eines handelsüblichen Montanwachses, übertrifft jedoch bei Transparenzmessungen das handelsübliche Produkt deutlich im modifizierten Ansatz und um Größenordnungen im reinen Hart-PVC. Darüber hinaus ist der Partialester der Erfindung zusammen mit den Sn-Stabilisierungsmitteln synergistisch wirksam; sowohl in modifiziertem als auch in nichtmodifiziertem PVC wird die Langzeitstabilität um ca. 10 % verbessert. Handelsübliche Montanwachse zeigen diesen Effekt nicht; sie verhalten sich hier indifferent.

Der Partialester gemäß Beispiel 3 (Diglycerin-sesquimontanat) ergibt eine erhebliche Steigerung in der Trennleistung in modifizierten Hart-PVC-Ansätzen gegenüber dem handelsüblichen Produkt und übertrifft dieses auch bezüglich der Transparenz. In reinem Hart-PVC erreicht die Verbindung der Erfindung Transparenzwerte, die bisher mit keinem Handelsprodukt erzielbar waren, auch nicht mit solchen außerhalb der Montanwachsklasse.

Der Partialester gemäß Beispiel 1 (Glycerin-dimontanat) erreicht die mit Abstand besten Trennwerte aller untersuchten Motanwachse, unabhängig davon, ob in der Rezeptur Modifizierungsmittel mitverwendet werden. Auch bei Brabender-Untersuchungen zeigt der Diester starke Gleitwirkung und bewirkt eine deutliche Herabsetzung des Knetwiderstandes im Maximum der Drehmomentkurve. Erstaunlich sind für ein derartig hochwirksames Produkt die guten Transparenzwerte, vor allem in modifizierten Rezepturen.

Der Partialester gemäß Beispiel 7 (Sorbit-trimontanat) ergibt in allen getesteten, modifizierten und unmodifizierten PVC-Ansätzen eine verbesserte Klebfreiheit bei im wesentlichen gleicher early-color-Stabilität sowie im nicht modifizierten PVC eine zum Teil erheblich verbesserte Transparenz.

Es konnte nicht erwartet werden, daß mit den Partialestern der Erfindung die Trennleistung gesteigert werden kann. Daß in einigen Fällen auch ein synergistischer Effekt neben schwefelhaltigen Sn-Stabilisatoren hinzukommt, ist als weiterer Vorteil der Partialester der Erfindung anzusehen.

## Patentansprüche

1. Partialester gesättigter, geradkettiger $C_{22}$-$C_{34}$-Monocarbonsäuren mit Polyolen aus der von Glycerin, Diglycerin, Pentaerythrit, Neopentylglykol, 1,4-Butandiol und Sorbit gebildeten Gruppe, die im Zahlenmittel mindestens eine freie Hydroxylgruppe aufweisen und als Gemische von Partialestern mindestens Zweier Monocarbonsäuren aus dem Kettenlängenbereich von $C_{22}$ bis $C_{34}$ vorliegen.

2. Partialester nach Anspruch 1, dadurch gekennzeichnet, daß die $C_{22}$-$C_{34}$ Monocarbonsäuren aus Montanwachsen gewonnene Montansäuren sind.

3. Partialmontansäureester des Diglycerins.

4. Partialmontansäureester des Glycerins.

5. Partialmontansäureester des Pentaerythrits.

6. Partialmontansäureester des Neopentylglykols.

7. Partialmontansäureester des 1,4-Butandiols.

8. Partialmontansäureester des Sorbits.

9. Verfahren zur Herstellung von Partialestern gesättigter, geradkettiger $C_{22}$-$C_{34}$-Monocarbonsäuren mit Polyolen aus der von Glycerin, Diglycerin, Pentaerythrit, Neopentylglykol, 1,4-Butandiol und Sorbit gebildeten Gruppe, die im Zahlenmittel mindestens eine freie Hydroxylgruppe aufweisen und die als Gemisch von Partialestern mindestens zweier Monocarbonsäuren aus dem Kettenlängenbereich von $C_{22}$ bis $C_{34}$ vorliegen, dadurch gekennzeichnet, daß man ein $C_{22}$ bis $C_{34}$ Monocarbonsäuregemisch, das mindestens 2 Monocarbonsäuren aus dem Kettenlängenbereich $C_{22}$ bis $C_{34}$ enthält, mit den Polyolen in Gegenwart von Katalysatoren verestert.

10. Verfahren nach Anspruch 9, dadurch gekennzeichnet, daß man Montansäuren mit den Polyolen verestert.

11. Verfahren nach Anspruch 9 oder 10, dadurch gekennzeichnet, daß man zur Herstellung von Partialmontansäureestern des Glycerins, insbesondere von Glycerin-dimontanat, Glycerin und Montansäure im molaren Verhältnis von 1:1 bis 1:2, insbesondere von 1:2, einsetzt.

12. Verfahren nach Anspruch 9 oder 10, dadurch gekennzeichnet, daß man zur Herstellung von Partialmontansäureestern des Diglycerins, insbesondere Diglycerin-sesquimontanat, Diglycerin und Montansäure im molaren Verhältnis 1:1 bis 1:3, insbesondere von 1:1,5, einsetzt.

13. Verfahren nach Anspruch 9 oder 10, dadurch gekennzeichnet, daß man zur Herstellung von Partialmontansäureestern des Pentaerythrits, insbesondere Pentaerythrit-dimontanat, Pentaerythrit und Montansäure im molaren Verhältnis von 1:1 bis 1:3, insbesondere von 1:2, einsetzt.

14. Verfahren nach Anspruch 9 oder 10, dadurch gekennzeichnet, daß man zur Herstellung von Partialmontansäureestern des Neopentylglykols, insbesondere Neopentylglykol-monomontanat, Neopentylglykol und Montansäure im molaren Verhältnis von 1:1 bis 1:1,2, insbesondere von 1:1, einsetzt.

15. Verfahren nach Anspruch 9 oder 10, dadurch gekennzeichnet, daß man zur Herstellung von 1,4-Butandiol-monomontanat 1,4-Butandiol und Montansäure im molaren Verhältnis von 1:1 einsetzt.

16. Verfahren nach Anspruch 9 oder 10, dadurch gekennzeichnet, daß man zur Herstellung von Partialmontansäureestern des Sorbits, insbesondere Sorbit-trimontanat, Sorbit und Montansäure im molaren Verhältnis von 1:1 bis 1:5, insbesondere von 1:3, einsetzt.

17. Verwendung von Partialestern gesättigter, geradkettiger $C_{22}$ bis $C_{34}$-Monocarbonsäuren mit Polyolen aus der von Glycerin, Diglycerin, Pentaerythrit, Neopentylglykol, 1,4-Butandiol und Sorbit gebildeten Gruppe, die im Zahlenmittel mindestens eine freie Hydroxylgruppe aufweisen und die als Gemische von Partialestern mindestens zweier Monocarbonsäuren aus dem Kettenlängenbereich von $C_{22}$ bis $C_{34}$ vorliegen, als Trennmittel für Kunststoffe sowie diese enthaltende Kunststoffe, insbesondere auf Basis von PVC oder PVC-Copolymerisaten.

18. Verwendung nach Anspruch 17, dadurch gekennzeichnet, daß die Partialester aus Montanwachsen gewonnenen Montansäuren hergestellt sind.

19. Verwendung nach Anspruch 17 oder 18, dadurch gekennzeichnet, daß man Partialmontansäureester des Glycerins einsetzt.

20. Verwendung nach Anspruch 17 oder 18, dadurch gekennzeichnet, daß man Partialmontansäureester des Diglycerins einsetzt.

21. Verwendung nach Anspruch 17 oder 18, dadurch gekennzeichnet, daß man Partialmontansäureester des Pentaerythrits einsetzt.

22. Verwendung nach Anspruch 17 oder 18, dadurch gekennzeichnet, daß man Partialmontansäureester des Neopentylglykols einsetzt.

23. Verwendung nach Anspruch 17 oder 18, dadurch gekennzeichnet, daß man Partialmontansäureester des 1,4-Butandiols einsetzt.

24. Verwendung nach Anspruch 17 oder 18, dadurch gekennzeichnet, daß man Partialmontansäureester des Sorbits einsetzt.

25. Kunststofformmassen, insbesondere auf Basis von PVC oder PVC-Copolymerisaten, enthaltend 0,01 bis 5,0 Gew.-% Partialester nach einem der Ansprüche 1 bis 8.

26. Kunststofformmassen, insbesondere auf Basis von PVC oder PVC-Copolymerisaten, erhalten unter Zusatz von 5 Gew.-% Partialestern, hergestellt nach einem der Ansprüche 9 bis 16.

Claims

1. Partial esters of saturated, linear $C_{22-34}$ monocarboxylic acids with polyols from the group consisting of glycerol, diglycerol, pentaerythrtiol, neopentyl glycol, butane-1,4-diol and sorbitol which, on average, contain at least 1 free hydroxyl group and which are present as mixtures of partial esters of at least two monocarboxylic acids from the $C_{22-34}$ chain length range.

**2.** Partial esters as claimed in claim 1, characterized in that the $C_{22-34}$ monocarboxylic acids are montanic acids obtained from montan waxes.

**3.** Partial montanic acid esters of diglycerol.

**4.** Partial montanic acid esters of glycerol,

**5.** Partial montanic acid esters of pentaerythritol.

**6.** Partial montanic acid esters of neopentyl glycol.

**7.** Partial montanic acid esters of 1,4-butanediol.

**8.** Partial montanic acid esters of sorbitol.

**9.** A process for the production of partial esters of saturated, linear $C_{22-34}$ monocarboxylic acids with polyols from the group consisting of glycerol, diglycerol, pentaerythrtiol, neopentyl glycol, butane-1,4-diol and sorbitol which, on average, contain at least 1 free hydroxyl group and which are present as mixtures of partial esters of at least two carboxylic acids from the $C_{22-34}$ chain length range, characterized in that a mixture of $C_{22-34}$ monocarboxylic acids containing at least 2 monocarboxylic acids from the $C_{22-34}$ chain length range is esterified with the polyols in the presence of catalysts.

**10.** A process as claimed in claim 9, characterized in that montanic acids are esterified with the polyols.

**11.** A process as claimed in claim 9 or 10, characterized in that, to produce partial montanic acid esters of glycerol, more especially of glycerol dimontanate, glycerol and montanic acid are used in a molar ratio of 1:1 to 1:2 and more especially in a molar ratio of 1:2.

**12.** A process as claimed in claim 9 or 10, characterized in that, to produce partial montanic acid esters of diglycerol, more especially diglycerol sesquimontanate, diglycerol and montanic acid are used in a molar ratio of 1:1 to 1:3 and more especially in a molar ratio of 1:1.5.

**13.** A process as claimed in claim 9 or 10, characterized in that, to produce partial montanic acid esters of pentaerythritol, more especially pentaerythritol dimontanate, pentaerythritol and montanic acid are used in a molar ratio of 1:1 to 1:3 and more especially in a molar ratio of 1:2.

**14.** A process as claimed in of claim 9 or 10, characterized in that, to produce partial montanic acid esters of neopentyl glycol, more especially neopentyl glycol monomontanate, neopentyl glycol and montanic acid are used in a molar ratio of 1:1 to 1:1.2 and more especially in a molar ratio of 1:1.

**15.** A process as claimed in of claim 9 or 10, characterized in that, to produce butane-1,4-diol monomontanate, butane-1,4-diol and montanic acid are used in a molar ratio of 1:1.

**16.** A process as claimed in of claim 9 or 10, characterized in that, to produce partial montanic acid esters of sorbitol, more especially sorbitol trimontanate, sorbitol and montanic acid are used in a molar ratio of 1:1 to 1:5 and more especially in a molar ratio of 1:3.

**17.** The use of partial esters of saturated, linear $C_{22-34}$ monocarboxylic acids with polyols from the group consisting of glycerol, diglycerol, pentaerythrtiol, neopentyl glycol, butane-1,4-diol and sorbitol which, on average, contain at least one free hydroxyl group and which are present as mixtures of partial esters of at least 2 monocarboxylic acids from the $C_{22-34}$ chain length range as release agents for plastics and plastics containing them, more particularly plastics based on PVC or PVC copolymers

**18.** The use claimed in claim 17, characterized in that the partial esters are produced from montanic acids obtained from montan waxes.

**19.** The use claimed in claim 17 or 18, characterized in that partial montanic acid esters of glycerol are used.

EP 0 273 283 B1

**20.** The use claimed in claim 17 or 18, characterized in that partial montanic acid esters of diglycerol are used.

**21.** The use claimed in claim 17 or 18, characterized in that partial montanic acid esters of pentaerythritol are used.

**22.** The use claimed in claim 17 or 18, characterized in that partial montanic acid esters of neopentyl glycol are used.

**23.** The use claimed in claim 17 or 18, characterized in that partial montanic acid esters of butane-1,4-diol are used.

**24.** The use claimed in claim 17 or 18, characterized in that partial montanic acid esters of sorbitol are used.

**25.** Moulding compounds, more especially based on PVC or PVC copolymers, containing from 0.01 to 5.0% by weight of the partial esters claimed in any of claims 1 to 8.

**26.** Moulding compounds, more especially based on PVC or PVC copolymers, obtained with addition of 5% by weight of partial esters produced by the process claimed in any of claims 9 to 16.

**Revendications**

**1.** Esters partiels d'acides monocarboxyliques on $C_{22}$-$C_{34}$ saturés à chaîne droite avec des polyols du groupe formé par le glycérol, diglycérol, pentaerithritol, néopentylglycol, 1,4-butanediol et sorbitol qui comprennent au milieu du nombre au moins un groupe hydroxyle libre et sont présents on mélanges d'esters partiels d'au moins deux acides monocarboxyliques du domaine de longueur de chaîne de $C_{22}$-$C_{34}$.

**2.** Esters partiels selon la revendication 1, caractérisés en ce que les acides monocarboxyliques sont des acides montaniques dérivés de cires montaniques.

**3.** Ester partiel de l'acide montanique du diglycérol.

**4.** Ester partiel de l'acide montanique du glycérol.

**5.** Ester partiel de l'acide montanique du pentaérithrytol.

**6.** Ester partiel de l'acide montanique du néopentylglycol.

**7.** Ester partiel de l'acide montanique du 1,4-butanediol.

**8.** Ester partiel de l'acide montanique du sorbitol.

**9.** Procédé de fabrication d'esters partiels d'acides monocarboxyliques en $C_{22}$-$C_{34}$, saturés, à chaînes droites à partir du groupe formé par le glycérol, diglycérol, pentaérithrytol, néopentylglycol, 1,4-butanediol et sorbitol, qui ont ou moins au milieu du nombre un groupe hydroxyle libre et qui présentent comme mélange d'esters partiels au moins deux acides monocarboxyliques de la gamme dos chaînes longues on $C_{22}$-$C_{34}$, caractérisé en ce qu'on estérifie un mélange d'acides monocarboxyliques en $C_{22}$ à $C_{34}$, qui contient au moins 2 acides monocarboxyliques de la gamme des chaînes longues $C_{22}$ à $C_{34}$, avec les polyols en présence de catalyseurs.

**10.** Procédé selon la revendication 9, caractérisé on ce qu'on estérifie des acides montaniques avec les polyols.

**11.** Procédé selon les revendications 9, à 10, caractérisé en ce qu'on met on oeuvrre, pour produire des esters partiels d'acides montaniques du glycérol, en particulier le démontanate de glycérol, du glycérol et de l'acide montanique dans le rapport molaire de 1:1 à 1:2, en particulier de 1:2.

12

**12.** Procédé selon les revendications 9 ou 10, caractérisé en ce qu'on met en oeuvre, pour produire des esters partiels d'acide montanique du diglycérol en particulier le sesquimontanate de diglycérol, du diglycérol et de l'acide amontage dans le rapport molaire de 1:1 à 1:3, en particulier de 1:1,5.

**13.** Procédé selon les revendications 9 ou 10, caractérisé en ce qu'on met en oeuvre, pour produire des esters partiels d'acide montanique de la pentaérythrite, en particulier le dimontanate de pentaérythritol, du pentaérythritol et de l'acide montanique dans le rapport molaire de 1:1 à 1:3, en particulier de 1:2.

**14.** Procédé selon les revendications 9 ou 10, caractérisé en ce qu'on met en oeuvre pour la production d'esters partiels d'acide montanique du néopentylglycol, en particulier le monomontanate de néopentylglycol, du néopentylglycol et de l'acide montanique dans le rapport molaire de 1:1 à 1:1,2, en particulier de 1:1.

**15.** Procédé selon les revendications 9 ou 10, caractérisé en ce qu'on met en oeuvre pour la production de monomontanate de 1-4-butanediol, du 1,4-butanediol et de l'acide montanique dans le rapport molaire de 1:1.

**16.** Procédé selon les revendications 9 ou 10, caractérisé en ce qu'on met en oeuvre pour la production d'esters partiels d'acide montanique du sorbitol, en particulier le trimontanate de sorbitol, du sorbitol et de l'acide montanique dans le rapport molaire de 1:1 à 1:5, en particulier de 1:3.

**17.** Utilisation d'esters partiels d'acides monocarboxyliques en $C_{22}$ à $C_{34}$, saturés, à chaînes droites, avec des polyols du groupe formé du glycérol, diglycérol, pentaérythritol, néopentylglycol, 1,4-butanediol et sorbitol, qui ont au milieu du nombre, au moins un groupe hydroxyle libre et qui sont présents en mélanges d'esters partiels d'ou moins deux acides monocarboxyliques de la gamme de chaînes longues de $C_{22}$ à $C_{34}$, utilisation comme agent de séparation pour matières plastiques ainsi que matières plastiques les contenant particulièrement à base de PVC ou de copolymères de PVC.

**18.** Utilisation selon la revendication 17, caractérisée on ce que les esters partiels sont produits à partir d'acides montaniques obtenus à partir des cires montaniques.

**19.** Utilisation selon les revendications 17 ou 18, caractérisée en ce qu'on net en oeuvre des esters partiels d'acide montage du glycérol.

**20.** Utilisation selon les revendications 17 ou 18, caractérisée en ce qu'on met en oeuvre des esters partiels d'acide montanique du diglycérol.

**21.** Utilisation selon les revendications 17 ou 18, caractérisée en ce qu'on met en oeuvre des esters partiels d'acide montanique du pentaérythritol.

**22.** Utilisation selon les revendications 17 ou 18, caractérisée en ce qu'on met on oeuvre des esters partiels d'acide montanique du néopentylglycol.

**23.** Utilisation selon les revendications 17 ou 18, caractérisée en ce qu'on met en oeuvre des esters partiels d'acide montanique du 1,4-butanediol.

**24.** Utilisation selon les revendications 17 ou 18, caractérisée en ce qu'on met en oeuvre des esters partiels d'acide montanique du sorbitol.

**25.** Matières à mouler plastiques, en particulier à base de PVC ou de copolymères de PVC, contenant de 0,01 à 5 % en poids d'esters partiels selon l'une des revendications 1 à 8.

**26.** Matières à mouler plastiques, en particulier à base de PVC ou de copolymères de PVC, obtenues en ajoutant 5 % en poids d'esters partiels, produits selon l'une des revendications 9 à 16.